# EUROPÄISCHE PATENTANMELDUNG

(11) **EP 4 507 252 A1**
(43) Veröffentlichungstag der Anmeldung: **12.02.2025**
(21) Anmeldenummer: 23190078.8
(22) Anmeldetag: 07.08.2023
(51) Int. Cl.: H04L 12/46, G05B 19/418, H04L 12/40

(54) **SCHNITTSTELLENEINRICHTUNG, ANORDNUNG MIT SCHNITTSTELLENEINRICHTUNG UND VERFAHREN ZU DEREN BETRIEB UND UMRÜSTUNG**

(71) Anmelder: Pepperl+Fuchs SE, 68307 Mannheim (DE)
(72) Erfinder: GALM, Horst, 12277 Berlin (DE); OETTLER, Matthias, 12277 Berlin (DE); HÖPPCHEN, Jürgen, 12277 Berlin (DE); LOHMANN, Gerrit, 12277 Berlin (DE)
(74) Vertreter: Fischer, Uwe

(57) **Zusammenfassung**

Die Erfindung bezieht sich unter anderem auf eine Schnittstelleneinrichtung (30) mit einer busseitigen Schnittstelle (31) zum Anschluss an einen Datenbus (10) und mindestens einer feldgeräteseitigen Schnittstelle (331, 332) zum Anschluss an ein Feldgerät (41, 42). Erfindungsgemäß ist bezüglich einer solchen Schnittstelleneinrichtung (30) vorgesehen, dass die busseitige Schnittstelle (31) eine Zweidraht-Schnittstelle zum Anschluss an einen zweiadrigen Datenbus (10) ist und dazu ausgestaltet ist, über den zweiadrigen Datenbus (10) Zweidraht-Ethernet-Datenpakete (2EDP) zu empfangen und zu senden, die mindestens eine feldgeräteseitige Schnittstelle (331, 332) oder zumindest eine der feldgeräteseitigen Schnittstellen (331, 332) eine analoge Schnittstelle ist, die zum Anschluss eines ein analoges Messsignal (AM) liefernden und/oder ein analoges Steuersignal (AS) verarbeitenden Feldgeräts (41, 42) geeignet ist und die Schnittstelleneinrichtung (30) eine Kommunikationseinheit (32) aufweist, die zwischen die analoge Schnittstelle (331, 332) und die busseitige Schnittstelle (31) geschaltet ist und diese signalmäßig verbindet.

## Beschreibung

Die Erfindung bezieht sich auf Schnittstelleneinrichtungen mit einer busseitigen Schnittstelle zum Anschluss an einen Datenbus und mindestens einer feldgeräteseitigen Schnittstelle zum Anschluss an ein Feldgerät.

In Industrieanlagen wurden in der Vergangenheit zur Datenübertragung bzw. zu Automatisierungszwecken sehr häufig serielle Bussysteme wie beispielsweise der sogenannte Profibus eingesetzt. Vom Profibus gibt es drei Varianten, wobei der Profibus DP (Dezentrale Peripherie) dominiert hat. Der Profibus DP dient zum Auslesen und zur Ansteuerung von Sensoren und Aktoren, die analoge Signale liefern oder erwarten, durch eine zentrale Steuerung und wurde bevorzugt in der Fertigungstechnik und der chemischen Industrie eingesetzt. Der Profibus DP ermöglicht Datenraten bis zu 12 Mbit/s auf verdrillten Zweidrahtleitungen.

In neueren Industrieanlagen werden heutzutage in der Regel Ethernet-basierte Systeme eingesetzt, bei denen die Datenübertragung mit Hilfe von Standard-Ethernet-Paketen über vieradrige Netzwerkleitungen erfolgt. Beispielsweise werden von der Pepperl+Fuchs SE für solche Ethernet-Anwendungen moderne Ethernet-APL(Advanced physical layer)-Schnittstelleneinrichtungen angeboten. Diese Schnittstelleneinrichtungen können auf ihrer Netzwerkseite an ein Standard-Ethernet-Netzwerk, das bekanntermaßen auf einem vieradrigen Leitungssystem beruht, angeschlossen und über dieses mit einer zentralen Steuereinrichtung verbunden werden. Auf der Feldgeräteseite bietet die Ethernet-APL-Schnittstelleneinrichtung sogenannte APL-Ethernetanschlüsse an, an die sich APL-Ethernet-fähige Feldgeräte anschließen lassen. Feldgeräteseitig arbeitet die Ethernet-APL-Schnittstelleneinrichtung also ebenfalls auf Ethernet-basierter Technik, weshalb Ethernet-fähige Feldgeräte erforderlich sind.

Der Erfindung liegt die Aufgabe zugrunde, eine Schnittstelleneinrichtung anzugeben, die mit Blick auf die erfolgten Fortschritte im Bereich der Übertragungstechniken eine Umrüstung der oben beschriebenen alten Industrieanlagen in besonders einfacher Weise ermöglichen.

Diese Aufgabe wird erfindungsgemäß durch eine Schnittstelleneinrichtung mit den Merkmalen gemäß Patentanspruch 1 gelöst. Vorteilhafte Ausgestaltungen der erfindungsgemäßen Schnittstelleneinrichtung sind in Unteransprüchen angegeben.

Danach ist erfindungsgemäß vorgesehen, dass die busseitige Schnittstelle eine Zweidraht-Schnittstelle zum Anschluss an einen zweiadrigen Datenbus ist und dazu geeignet ist, über den zweiadrigen Datenbus Zweidraht-Ethernet-Datenpakete zu empfangen und zu senden, die mindestens eine feldgeräteseitige Schnittstelle oder zumindest eine der feldgeräteseitigen Schnittstellen eine analoge Schnittstelle ist, die zum Anschluss eines ein analoges Messsignal liefernden und/oder ein analoges Steuersignal verarbeitenden Feldgeräts geeignet ist und die Schnittstelleneinrichtung eine Kommunikationseinheit aufweist, die Zweidraht-Ethernet-Datenpakete (2EDP) verarbeiten und erzeugen kann und zwischen die analoge Schnittstelle und die busseitige Schnittstelle geschaltet ist und diese signalmäßig verbindet.

Ein wesentlicher Vorteil der erfindungsgemäßen Schnittstelleneinrichtung ist darin zu sehen, dass diese ohne weiteres in alten Industrieanlagen eingesetzt werden kann, weil sie mit einem zweiadrigen Datenbus zusammenarbeiten kann.

Mit anderen Worten müssen - im Unterschied beispielsweise zu einem Standard-Ethernet-Ansatz - keine neuen Kabel verlegt werden, um den busseitigen Datenübertragungsbetrieb im Ethernet-Modus zu ermöglichen. Auch müssen feldgeräteseitig keine Anpassungen vorgenommen werden, weil die erfindungsgemäße Schnittstelleneinrichtung feldgeräteseitig - anders beispielsweise als die oben beschriebene moderne Ethernet-APL-Schnittstelleneinrichtung der Pepperl+Fuchs SE - analog arbeitet und analoge Messsignale von Feldgeräten empfangen und analoge Steuersignale an Feldgeräte senden kann.

Ein weiterer wesentlicher Vorteil der erfindungsgemäßen Schnittstelleneinrichtung ist darin zu sehen, dass diese einen Betrieb des zweiadrigen Datenbusses in Paketform vorsieht, wodurch es - anders als beispielsweise beim Profibus - möglich ist, zusätzlich zu der Steuereinrichtung noch weitere andere Einrichtungen wie beispielsweise Asset-Management-Systeme oder sonstige Überwachungs- und Monitoring-Systeme an den Datenbus anzuschließen. Derartige Asset-Management-Systeme oder sonstige Überwachungs- und Monitoring-Systeme können unmittelbar mit den Feldgeräten kommunizieren und/oder die Funktion einer mit den Feldgeräten zusammenarbeitenden Steuereinrichtung übernehmen.

Bei einer bevorzugten Ausführungsform ist vorgesehen, dass die busseitige Schnittstelle, die feldgeräteseitigen Schnittstellen und die Kommunikationseinheit auf einer gemeinsamen Leiterplatte aufgelötet sind.

Bei einer anderen bevorzugten Ausführungsform ist vorgesehen, dass die busseitige Schnittstelle, die feldgeräteseitigen Schnittstellen und die Kommunikationseinheit in individuelle Module integriert werden, also die feldgeräteseitigen Schnittstellen in ein feldgeräteseitiges Schnittstellenmodul, die busseitige Schnittstelle in ein busseitiges Schnittstellenmodul und die Kommunikationseinheit in ein Kommunikationsmodul. Die genannten drei Module stehen vorzugsweise über eine Rückverdrahtungseinheit zum Beispiel in Form einer Backplane in Verbindung.

Bei einer wiederum anderen bevorzugten Ausführungsform ist vorgesehen, dass die busseitige Schnittstelle und ein Teil der Kommunikationseinheit durch ein busseitiges Funktionsmodul und die feldgeräteseitigen Schnittstellen und der andere Teil der Kommunikationseinheit durch ein feldgeräteseitiges Funktionsmodul gebildet werden. Die Funktionsmodule stehen vorzugsweise über eine Rückverdrahtungseinheit zum Beispiel in Form einer Backplane in Verbindung. Durch die Aufteilung der Kommunikationseinheit können Einschubplätze in der Rückverdrahtungseinheit eingespart werden.

Zwischen die analoge Schnittstelle oder zumindest eine der analogen Schnittstellen und die Kommunikationseinheit ist vorzugsweise ein eingangsseitiger A/D-Wandler angeschlossen; in diesem Falle ist die Kommunikationseinheit vorzugsweise dazu ausgestaltet, von dem A/D-Wandler durch A/D-Wandlung des analogen Messsignals erzeugte Digitalwerte zu einem oder mehr Zweidraht-Ethernet-Datenpaketen zu verarbeiten und dieses an der busseitigen Schnittstelle auszugeben.

Alternativ oder zusätzlich kann in vorteilhafter Weise vorgesehen sein, dass die Kommunikationseinheit dazu ausgestaltet ist, aus einem oder mehreren an der busseitigen Schnittstelle empfangenen und ein digitales Steuersignal enthaltenden Zweidraht-Ethernet-Datenpaketen das digitale Steuersignal auszulesen; zwischen die Kommunikationseinheit und die analoge Schnittstelle ist vorzugsweise ein D/A-Wandler geschaltet, der durch D/A-Wandlung des digitalen Steuersignals ein analoges Steuersignal bildet und dieses an der analogen Schnittstelle ausgibt.

Mit Blick auf ein Umrüsten von Altanlagen bzw. alten Industrieanlagen, aber auch bei anderen neuen Anlagen, wird es als besonders vorteilhaft angesehen, wenn die busseitige Schnittstelle eine Schraubklemmeneinrichtung umfasst, die einen Anschluss an den zweiadrigen Datenbus durch Anschrauben zweier Anschlussleiter ermöglicht.

Alternativ oder zusätzlich kann - ebenfalls mit Blick auf ein Umrüsten von Altanlagen - in vorteilhafter Weise vorgesehen sein, dass die busseitige Schnittstelle eine Federklemmeneinrichtung umfasst, die einen Anschluss an den zweiadrigen Datenbus durch Festklemmen zweier Anschlussleiter ermöglicht.

Besonders vorteilhaft ist es, wenn die Kommunikationseinheit außerdem dazu ausgestaltet ist, die busseitige Schnittstelle zusätzlich als Spannungsversorgungsschnittstelle zur Aufnahme von Versorgungsenergie zu nutzen, die von dem zweiadrigen Datenbus zur Verfügung gestellt wird.

Die Erfindung bezieht sich außerdem auf eine Anordnung mit einem Datenbus. Erfindungsgemäß ist bezüglich der Anordnung vorgesehen, dass der Datenbus zweiadrig ist und an den Datenbus eine Schnittstelleneinrichtung wie oben beschrieben und eine zentrale Steuereinrichtung angeschlossen sind.

Die Steuereinrichtung ist vorzugsweise dazu ausgestaltet, ein oder mehr Zweidraht-Ethernet-Datenpakete der Schnittstelleneinrichtung, die diese aus einem analogen Messsignal eines an die Schnittstelleneinrichtung angeschlossenen Feldgeräts gebildet hat, zu empfangen und auszuwerten.

Die Steuereinrichtung ist vorzugsweise dazu ausgestaltet, ein oder mehr Zweidraht-Ethernet-Datenpakete an die Schnittstelleneinrichtung zu senden, die die Schnittstelleneinrichtung zu einem analogen Steuersignal für ein an die Schnittstelleneinrichtung angeschlossenes Feldgerät verarbeiten und an dieses ausgeben kann.

Auch kann in vorteilhafter Weise vorgesehen sein, dass an den zweiadrigen Datenbus zumindest eine Überwachungseinrichtung (z. B. in Form eines sogenannten "AMS" (Asset Management Systems)) angeschlossen ist, die geeignet ist, Zweidraht-Ethernet-Datenpakete zu empfangen und zu senden. Die Überwachungseinrichtung ist vorzugsweise dazu ausgestaltet, über den zweiadrigen Datenbus unter Einbezug der Schnittstelleneinrichtung mit den Feldgeräten zu kommunizieren und/oder die Funktion der Steuereinrichtung zu überwachen.

Die Erfindung bezieht sich außerdem auf ein Verfahren zum Betreiben einer Anordnung, die einen Datenbus und eine Schnittstelleneinrichtung mit einer busseitigen Schnittstelle zum Anschluss an den Datenbus und mindestens einer feldgeräteseitigen Schnittstelle zum Anschluss an ein Feldgerät aufweist. Erfindungsgemäß ist bezüglich eines solchen Verfahrens vorgesehen, dass die busseitige Schnittstelle als eine Zweidraht-Schnittstelle betrieben wird und über diese Zweidraht-Ethernet-Datenpakete empfangen und gesendet werden und die mindestens eine feldgeräteseitige Schnittstelle als analoge Schnittstelle betrieben wird und über diese analoge Messsignale empfangen und/oder analoge Steuersignale gesendet werden.

Bezüglich der Vorteile des erfindungsgemäßen Verfahrens und vorteilhafter Ausgestaltungen des erfindungsgemäßen Verfahrens sei auf die obigen Ausführungen im Zusammenhang mit der erfindungsgemäßen Schnittstelleneinrichtung und deren vorteilhafter Ausgestaltungen verwiesen.

Vorteilhaft ist es, wenn die Schnittstelleneinrichtung aus einem analogen Messsignal, das ein an die Schnittstelleneinrichtung angeschlossenes Feldgerät gebildet und zu der Schnittstelleneinrichtung übermittelt hat, ein oder mehr Zweidraht-Ethernet-Datenpakete bildet und diese über den zweiadrigen Datenbus zu der zentralen Steuereinrichtung übermittelt und die Steuereinrichtung die Zweidraht-Ethernet-Datenpakete der Schnittstelleneinrichtung empfängt und auswertet.

Auch ist es vorteilhaft, wenn die Steuereinrichtung ein digitales Steuersignal, das für ein Feldgerät bestimmt ist, zu einem oder mehr Zweidraht-Ethernet-Datenpaketen verarbeitet und das oder die Zweidraht-Ethernet-Datenpakete über den zweiadrigen Datenbus zu der Schnittstelleneinrichtung übermittelt und die Schnittstelleneinrichtung aus dem oder den empfangenen Zweidraht-Ethernet-Datenpaketen das digitale Steuersignal wiedergewinnt, daraus ein analoges Steuersignal bildet und dieses analoge Steuersignal über die analoge Schnittstelle zu dem Feldgerät übermittelt.

Die Erfindung bezieht sich außerdem auf ein Verfahren zum Umrüsten einer Anordnung, die eine Steuereinrichtung, einen zweiadrigen Datenbus, insbesondere einen Profibus, und analog arbeitende Feldgeräte umfasst. Erfindungsgemäß ist vorgesehen, dass zumindest eine vorhandene Schnittstelleneinrichtung, insbesondere eine Profibus-Schnittstelleneinrichtung, die mit einer busseitigen Schnittstelle zum Anschluss an den zweiadrigen Datenbus und mindestens einer feldgeräteseitigen Schnittstelle zum Anschluss an ein Feldgerät ausgestattet ist, durch eine Schnittstelleneinrichtung wie oben beschrieben ersetzt wird und der Betrieb des zweiadrigen Datenbusses von dem ursprünglichen Übertragungsbetrieb, insbesondere einem Profibus-Übertragungsbetrieb, auf einen Übertragungsbetrieb auf der Basis von Zweidraht-Ethernet-Datenpaketen umgestellt wird.

Die Erfindung wird nachfolgend anhand von Ausführungsbeispielen näher erläutert; dabei zeigen beispielhaft:
- Figur 1: ein Ausführungsbeispiel für eine erfindungsgemäße Anordnung, anhand derer beispielhaft ein Ausführungsbeispiel für eine erfindungsgemäße Schnittstelleneinrichtung und ein Ausführungsbeispiel für ein erfindungsgemäßes Verfahren erläutert werden, wobei bei dem Ausführungsbeispiel gemäß Figur 1 die Komponenten der Schnittstelleneinrichtung auf einer Leiterplatte aufgelötet sind und eine busseitige Schnittstelle eine Schraubklemmeneinrichtung umfasst,
- Figur 2: ein zweites Ausführungsbeispiel für eine erfindungsgemäße Anordnung, wobei bei dem Ausführungsbeispiel gemäß Figur 2 die busseitige Schnittstelle eine Federklemmeneinrichtung umfasst,
- Figur 3: ein drittes Ausführungsbeispiel für eine erfindungsgemäße Anordnung, wobei bei dem Ausführungsbeispiel gemäß Figur 3 Module der Schnittstelleneinrichtung in ein und demselben Gehäuse untergebracht sind,
- Figur 4: ein viertes Ausführungsbeispiel für eine erfindungsgemäße Anordnung, wobei bei dem Ausführungsbeispiel gemäß Figur 4 Module der Schnittstelleneinrichtung mittels derselben Rückverdrahtungseinheit miteinander verbunden sind, und
- Figur 5: ein fünftes Ausführungsbeispiel für eine erfindungsgemäße Anordnung, wobei bei dem Ausführungsbeispiel gemäß Figur 5 eine Kommunikationseinheit auf ein busseitiges Funktionsmodul und ein feldgeräteseitiges Funktionsmodul verteilt ist.

In den Figuren werden der Übersicht halber für identische oder vergleichbare Komponenten stets dieselben Bezugszeichen verwendet.

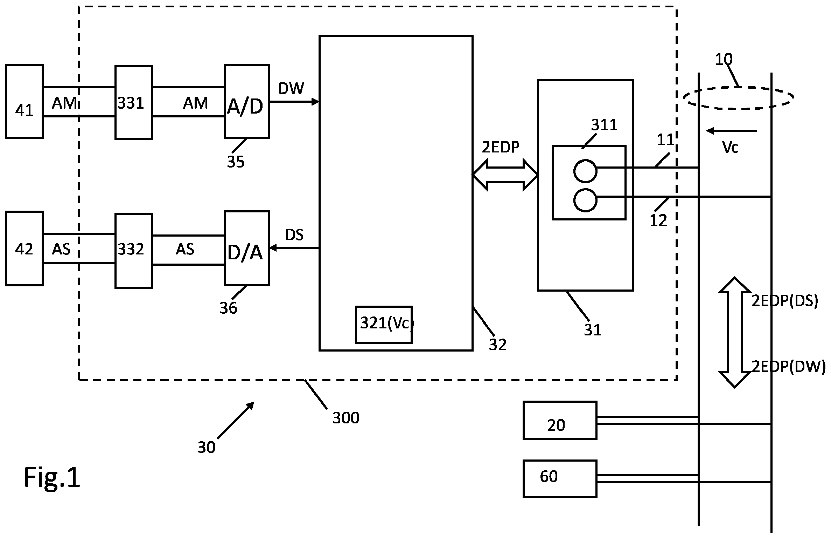

Die Figur 1 zeigt eine Anordnung mit einem Datenbus 10, einer Steuereinrichtung 20, einer Schnittstelleneinrichtung 30, einem in der Figur 1 oberen Feldgerät 41, einem in der Figur 1 unteren Feldgerät 42 und einer Überwachungseinrichtung 60.

Bei dem Datenbus 10 handelt es sich um einen zweiadrigen Datenbus 10, der zur Übertragung von Zweidraht-Ethernet-Datenpaketen 2EDP geeignet ist. Bei den Zweidraht-Ethernet-Datenpaketen 2EDP handelt es sich vorzugsweise um solche gemäß dem Single Pair Ethernet (SPE)-Standard, bei dem eine Ethernet-Übertragung über ein Paar Kupferadern erfolgt und der neben der Datenübertragung per Ethernet auch eine gleichzeitige Spannungsversorgung von Endgeräten ermöglicht wird. Single Pair Ethernet ist Teil der physikalischen Schicht im ISO/OSI-Referenzmodell.

Bei dem Datenbus 10 kann es sich beispielsweise um einen Datenbus einer industriellen Altanlage handeln, der früher als Profibus, beispielsweise Profibus DP, betrieben wurde und durch die Umstellung auf den Single Pair Ethernet (SPE)-Standard nun auf Ethernet-Basis betrieben wird und gleichzeitig zur Spannungsversorgung der Schnittstelleneinrichtung 30 und der Feldgeräte 41 und 42 verwendet werden kann. Bei den Feldgeräten 41 und 42 kann es sich um noch vorhandene analog arbeitende Altgeräte der Altanlage handeln, da diese weiterverwendet werden können.

Die Schnittstelleneinrichtung 30 umfasst unter anderem eine busseitige Schnittstelle 31, eine Kommunikationseinheit 32 und zumindest eine feldgeräteseitige Schnittstelle.

Bei dem Ausführungsbeispiel gemäß Figur 1 sind beispielhaft zwei feldgeräteseitige Schnittstellen 331 und 332 gezeigt, von denen die in der Figur 1 obere über einen A/D-Wandler 35 an die Kommunikationseinheit 32 angeschlossen ist und die in der Figur 1 untere über einen D/A-Wandler 36 an die Kommunikationseinheit 32 angeschlossen ist. Selbstverständlich können auch mehr als zwei feldgeräteseitige Schnittstellen 331 und 332 vorhanden sein oder auch nur eine einzige. Die feldgeräteseitigen Schnittstellen 331 und 332 sind analoge Schnittstellen.

Die busseitige Schnittstelle 31 ist an den Datenbus 10 angeschlossen und verbindet den Datenbus 10 mit der Kommunikationseinheit 32. Die busseitige Schnittstelle 31 umfasst bei dem Ausführungsbeispiel gemäß Figur 1 eine Schraubklemmeneinrichtung 311, die einen Anschluss an den zweiadrigen Datenbus 10 durch Anschrauben zweier Anschlussleiter 11 und 12 ermöglicht.

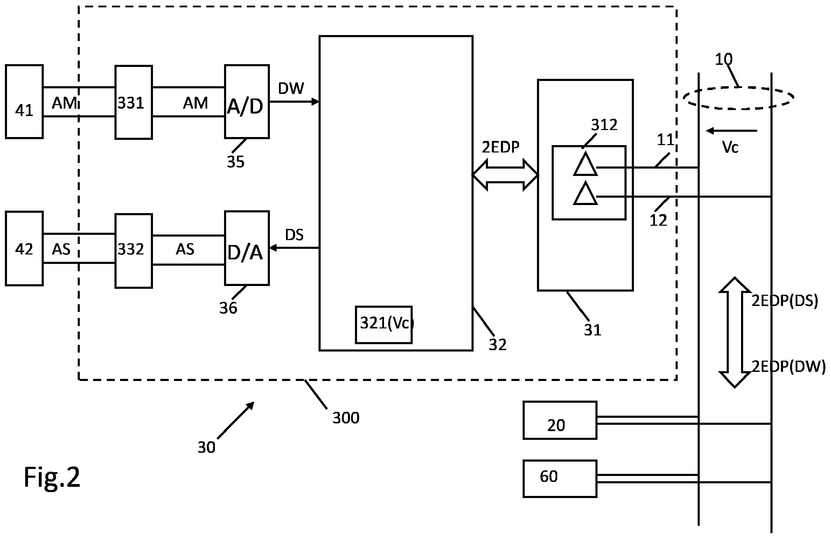

Alternativ oder zusätzlich kann die busseitige Schnittstelle 31 eine Federklemmeneinrichtung 312 aufweisen, die einen Anschluss an den zweiadrigen Datenbus 10 durch Festklemmen der zwei Anschlussleiter 11 und 12 ermöglicht; eine solche Ausführung zeigt die Figur 2.

Die Kommunikationseinheit 32 ist zwischen die analogen Schnittstellen 331 und 332 und die busseitige Schnittstelle 31 geschaltet ist und verbindet diese signalmäßig.

Beispielsweise ist die Kommunikationseinheit 32 dazu ausgestaltet, von dem A/D-Wandler 35 durch A/D-Wandlung eines an der analogen Schnittstelle 331 von dem oberen Feldgerät 41 empfangenen analogen Messsignals AM erzeugte Digitalwerte DW zu einem oder mehr Zweidraht-Ethernet-Datenpaketen 2EDP zu verarbeiten und dieses an der busseitigen Schnittstelle 31 auszugeben.

Darüber hinaus ist die Kommunikationseinheit 32 dazu ausgestaltet, aus einem oder mehreren an der busseitigen Schnittstelle 31 empfangenen Zweidraht-Ethernet-Datenpaketen 2EDP, die ein digitales Steuersignal DS enthalten, das digitale Steuersignal DS auszulesen. Ein solches digitales Steuersignal DS wird mittels des D/A-Wandlers 36 durch D/A-Wandlung in ein analoges Steuersignal AS gewandelt und über die analoge Schnittstelle 332 an das untere Feldgerät 42 ausgegeben.

Die Kommunikationseinheit 32 ist vorzugsweise außerdem mit einer Spannungsversorgungseinheit 321 zur Aufnahme von Versorgungsenergie in Form einer Versorgungsspannung Vc ausgestattet, die von dem zweiadrigen Datenbus 10 zur Verfügung gestellt wird. Die Versorgungsenergie bzw. die Versorgungsspannung Vc dient zum Betrieb der Kommunikationseinheit 32, des A/D-Wandlers 35 und des D/A-Wandlers 36 über nicht weiter dargestellte Versorgungsleitungen. Die Schnittstelleneinrichtung bzw. deren Kommunikationseinheit 32 nutzt die busseitige Schnittstelle 31 also außerdem als Spannungsversorgungsschnittstelle zur Aufnahme von Versorgungsenergie, die von dem zweiadrigen Datenbus 10 zur Verfügung gestellt wird. Die Spannungsversorgungseinheit 321 kann einen Teil der Versorgungsenergie über die analogen Schnittstellen auch an die Feldgeräte 41 und 42 zu deren Energieversorgung weiterleiten.

Bezüglich des konstruktiven Aufbaus der Schnittstelleneinrichtung 30 werden folgende Ausführungsformen als besonders vorteilhaft angesehen:
Bei einer ersten als vorteilhaft angesehenen Ausführungsform, wie sie in den Figuren 1 und 2 gezeigt ist, sind die Komponenten der Schnittstelleneinrichtung 30, also die feldgeräteseitigen Schnittstellen 331 und 332, der A/D-Wandler 35, der D/A-Wandler 36, die Kommunikationseinheit 32 und die busseitige Schnittstelle 31 auf einer gemeinsamen Leiterplatte 300 angeordnet und auf dieser aufgelötet.

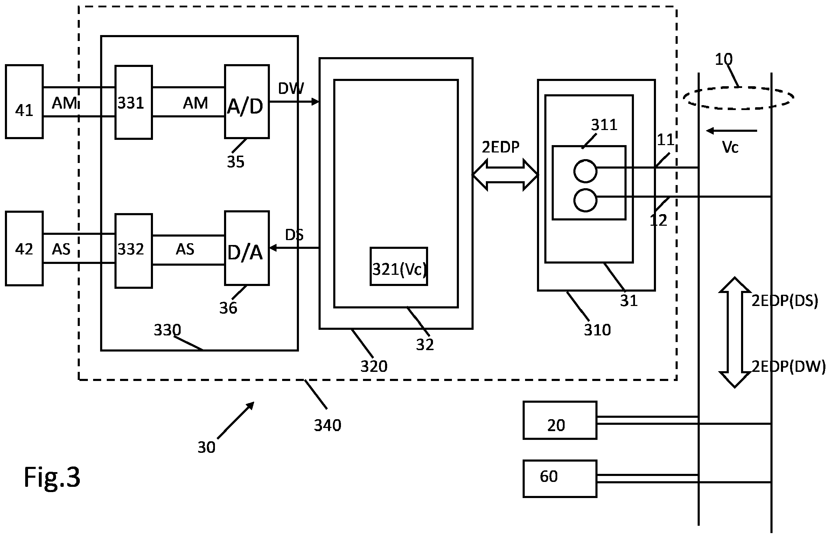

Bei einer zweiten als vorteilhaft angesehenen Ausführungsform, wie sie in der Figur 3 gezeigt ist, sind die feldgeräteseitigen Schnittstellen 331 und 332, der A/D-Wandler 35 und der D/A-Wandler 36 in einem feldgeräteseitigen Schnittstellenmodul 330 untergebracht. Die Kommunikationseinheit 32 befindet sich in einem Kommunikationsmodul 320 und die busseitige Schnittstelle 31 befindet sich in einem busseitigen Schnittstellenmodul 310. Das feldgeräteseitige Schnittstellenmodul 330, das Kommunikationsmodul 320 und das busseitige Schnittstellenmodul 310 können innerhalb eines gemeinsamen Gehäuses 340 untergebracht sein.

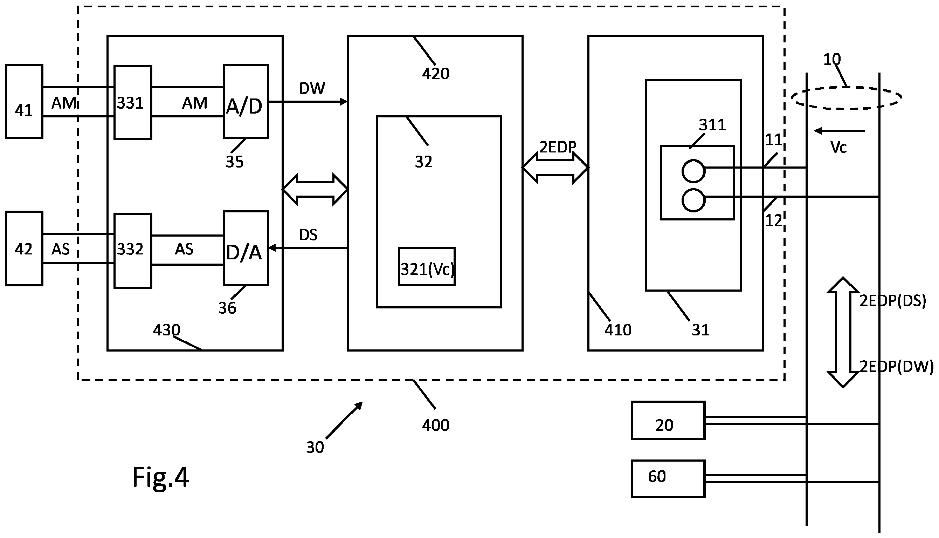

Bei einer dritten als vorteilhaft angesehenen Ausführungsform, wie sie in der Figur 4 gezeigt ist, sind ein feldgeräteseitiges Schnittstellenmodul 430, das die feldgeräteseitigen Schnittstellen 331 und 332, den A/D-Wandler 35 und den D/A-Wandler 36 umfasst, ein Kommunikationsmodul 420, das die Kommunikationseinheit 32 umfasst, und ein busseitige Schnittstellenmodul 410, das die busseitige Schnittstelle 31 umfasst, über eine Rückverdrahtungseinheit 400 (z. B. in Form eines Backplanes) miteinander verbunden. Die Rückverdrahtungseinheit 400 kann beispielsweise Einschubsteckplätze umfassen, in die das feldgeräteseitige Schnittstellenmodul 430, das Kommunikationsmodul 420 und das busseitige Schnittstellenmodul 410 jeweils eingesteckt werden. Die Einschubrichtung in die Einschubsteckplätze der Rückverdrahtungseinheit 400 ist in der Figur 4 senkrecht zur Blattebene ausgerichtet.

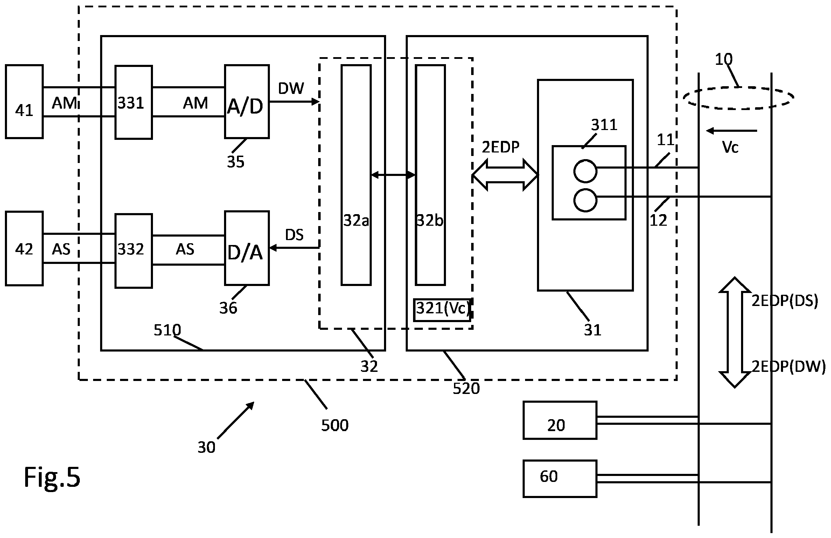

Bei einer vierten als vorteilhaft angesehenen Ausführungsform, wie sie in der Figur 5 gezeigt ist, ist die Kommunikationseinheit 32 bzw. die Funktionalität der Kommunikationseinheit 32 auf ein in der Figur 1 linkes Kommunikationssubmodul 32a und ein in der Figur 2 rechtes Kommunikationssubmodul 32b verteilt.

Das linke Kommunikationssubmodul 32a ist gemeinsam mit den feldgeräteseitigen Schnittstellen 331 und 332, dem A/D-Wandler 35 und dem D/A-Wandler 36 in einem feldgeräteseitigen Funktionsmodul 510 untergebracht.

Das rechte Kommunikationssubmodul 32b befindet sich gemeinsam mit der busseitigen Schnittstelle 31 in einem busseitigen Funktionsmodul 520.

Das feldgeräteseitige Funktionsmodul 510 und das busseitige Funktionsmodul 520 sind vorzugsweise über eine Rückverdrahtungseinheit 500 (z. B. in Form eines Backplanes) miteinander verbunden. Die Rückverdrahtungseinheit 500 kann beispielsweise Einschubsteckplätze umfassen, in die das feldgeräteseitige Funktionsmodul 510 und das busseitige Funktionsmodul 520 jeweils eingesteckt werden, wie dies im Zusammenhang mit der Figur 4 erläutert wurde. Die Einschubrichtung in die Einschubsteckplätze der Rückverdrahtungseinheit 500 ist in der Figur 5 senkrecht zu Blattebene ausgerichtet.

Da bei den obigen Ausführungsbeispielen die Kommunikationseinheit 32 datenflusstechnisch zwischen die busseitige Schnittstelle 31 und die zwei feldgeräteseitigen Schnittstellen 331 und 332 geschaltet ist, wird beispielsweise folgender Betrieb der Anordnung ermöglicht:
Will die Steuereinrichtung 20 ein digitales Steuersignal DS an das in der Figur 1 untere Feldgerät 42 senden, so erzeugt sie ein oder mehr Zweidraht-Ethernet-Datenpakete 2EDP, die das digitale Steuersignal DS enthalten oder datenmäßig beschreiben und sendet diese über den zweiadrigen Datenbus 10 an die Schnittstelleneinrichtung 30.

Die Kommunikationseinheit 32 der Schnittstelleneinrichtung 30 empfängt die Zweidraht-Ethernet-Datenpakete 2EDP mittels der busseitigen Schnittstelle 31 und wertet diese unter Rückgewinnung des digitalen Steuersignals DS aus. Anschließend übermittelt die Kommunikationseinheit 32 das digitale Steuersignal DS zu dem D/A-Wandler 36, der mit dem digitalen Steuersignal ein analoges Steuersignal AS bildet und dieses über die untere Schnittstelle 332 an das daran angeschlossene untere Feldgerät 42 weiterleitet.

In umgekehrter Datenflussrichtung dient die Schnittstelleneinrichtung 30 zum Übertragen eines analogen Messsignals AM, das das obere Feldgerät 41 bildet und über die obere analoge Schnittstelle 31 zum dem A/D-Wandler 35 übermittelt. Der A/D-Wandler 35 bildet mit dem analogen Messsignal AM ein digitales Messsignal bzw. Digitalwerte DW, die von der Kommunikationseinheit 32 zu einem oder mehreren Zweidraht-Ethernet-Datenpaketen 2EDP verarbeitet werden. Die Zweidraht-Ethernet-Datenpakete 2EDP werden über die busseitige Schnittstelle 31 in den zweiadrigen Datenbus 10 eingespeist und gelangen über diesen zu der Steuereinrichtung 20, die das Messsignal auswertet und beispielsweise zur Steuerung des unteren Feldgeräts 42 heranziehen kann.

Die ebenfalls an den zweiadrigen Datenbus 10 angeschlossene Überwachungseinrichtung 60 überwacht den Datenverkehr auf dem zweiadrigen Datenbus 10 durch Auswertung der übertragenen Zweidraht-Ethernet-Datenpakete 2EDP und kann auf diese Weise beispielsweise eine korrekte Arbeitsweise der Steuereinrichtung 20 überprüfen.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

### Bezugszeichenliste

- 10: Datenbus
- 11: Anschlussleiter
- 12: Anschlussleiter
- 20: Steuereinrichtung
- 30: Schnittstelleneinrichtung
- 31: busseitige Schnittstelle
- 32: Kommunikationseinheit
- 32a: Kommunikationssubmodul
- 32b: Kommunikationssubmodul
- 35: A/D-Wandler
- 36: D/A-Wandler
- 41: Feldgerät
- 42: Feldgerät
- 60: Überwachungseinrichtung
- 300: Leiterplatte
- 310: busseitiges Schnittstellenmodul
- 311: Schraubklemmeneinrichtung
- 312: Federklemmeneinrichtung
- 320: Kommunikationsmodul
- 321: Spannungsversorgungseinheit
- 330: feldgeräteseitiges Schnittstellenmodul
- 331: feldgeräteseitige Schnittstelle
- 332: feldgeräteseitige Schnittstelle
- 340: Gehäuse
- 400: Rückverdrahtungseinheit
- 410: busseitiges Schnittstellenmodul
- 420: Kommunikationsmodul
- 430: feldgeräteseitiges Schnittstellenmodul
- 500: Rückverdrahtungseinheit
- 510: feldgeräteseitiges Funktionsmodul
- 520: busseitiges Funktionsmodul
- 2EDP: Zweidraht-Ethernet-Datenpaket
- AM: analoges Messsignal
- AS: analoges Steuersignal
- DS: digitales Steuersignal
- DW: Digitalwerte
- Vc: Versorgungsspannung

## Patentansprüche

1. Schnittstelleneinrichtung (30) mit einer busseitigen Schnittstelle (31) zum Anschluss an einen Datenbus (10) und mindestens einer feldgeräteseitigen Schnittstelle (331, 332) zum Anschluss an ein Feldgerät (41, 42),
**dadurch gekennzeichnet, dass**
- die busseitige Schnittstelle (31) eine Zweidraht-Schnittstelle zum Anschluss an einen zweiadrigen Datenbus (10) ist und dazu geeignet ist, über den zweiadrigen Datenbus (10) Zweidraht-Ethernet-Datenpakete (2EDP) zu empfangen und zu senden,
- die mindestens eine feldgeräteseitige Schnittstelle (331, 332) oder zumindest eine der feldgeräteseitigen Schnittstellen (331, 332) eine analoge Schnittstelle ist, die zum Anschluss eines ein analoges Messsignal (AM) liefernden und/oder ein analoges Steuersignal (AS) verarbeitenden Feldgeräts (41, 42) geeignet ist und
- die Schnittstelleneinrichtung (30) eine Kommunikationseinheit (32) aufweist, die Zweidraht-Ethernet-Datenpakete (2EDP) verarbeiten und erzeugen kann und zwischen die analoge Schnittstelle (331, 332) und die busseitige Schnittstelle (31) geschaltet ist und diese signalmäßig verbindet.

2. Schnittstelleneinrichtung (30) nach Anspruch 1,
**dadurch gekennzeichnet, dass**
- zwischen die analoge oder zumindest eine der analogen Schnittstellen (331, 332) und die Kommunikationseinheit (32) ein eingangsseitiger A/D-Wandler (35) angeschlossen ist und
- die Kommunikationseinheit (32) dazu ausgestaltet ist, von dem A/D-Wandler (35) durch A/D-Wandlung des analogen Messsignals (AM) erzeugte Digitalwerte (DW) zu einem oder mehr Zweidraht-Ethernet-Datenpaketen (2EDP) zu verarbeiten und dieses an der busseitigen Schnittstelle (31) auszugeben.

3. Schnittstelleneinrichtung (30) nach einem der voranstehenden Ansprüche,
**dadurch gekennzeichnet, dass**
- die Kommunikationseinheit (32) dazu ausgestaltet ist, aus einem oder mehreren an der busseitigen Schnittstelle (31) empfangenen und ein digitales Steuersignal (DS) enthaltenden Zweidraht-Ethernet-Datenpaketen (2EDP) das digitale Steuersignal (DS) auszulesen, und
- zwischen die analoge Schnittstelle (331, 332) oder zumindest eine der analogen Schnittstellen (331, 332) und die Kommunikationseinheit (32) ein D/A-Wandler (36) geschaltet ist, der durch D/A-Wandlung des digitalen Steuersignals (DS) ein analoges Steuersignal (AS) bildet und dieses an der analogen Schnittstelle (331, 332) ausgibt.

4. Schnittstelleneinrichtung (30) nach einem der voranstehenden Ansprüche,
**dadurch gekennzeichnet, dass**
die busseitige Schnittstelle (31) eine Schraubklemmeneinrichtung (311) ist oder umfasst, die einen Anschluss an den zweiadrigen Datenbus (10) durch Anschrauben zweier Anschlussleiter (11, 12) ermöglicht.

5. Schnittstelleneinrichtung (30) nach einem der voranstehenden Ansprüche,
**dadurch gekennzeichnet, dass**
die busseitige Schnittstelle (31) eine Federklemmeneinrichtung (312) ist oder umfasst, die einen Anschluss an den zweiadrigen Datenbus (10) durch Festklemmen zweier Anschlussleiter (11, 12) ermöglicht.

6. Schnittstelleneinrichtung (30) nach einem der voranstehenden Ansprüche,
**dadurch gekennzeichnet, dass**
die feldgeräteseitigen Schnittstellen (331, 332) in ein feldgeräteseitiges Schnittstellenmodul (430) integriert sind, die busseitige Schnittstelle (31) in ein busseitiges Schnittstellenmodul (410) integriert ist und die Kommunikationseinheit (32) in ein Kommunikationsmodul (420) integriert ist und die genannten Module über eine Rückverdrahtungseinheit (400) in Verbindung stehen.

7. Schnittstelleneinrichtung (30) nach einem der voranstehenden Ansprüche,
**dadurch gekennzeichnet, dass**
die Schnittstelleneinrichtung (30) die busseitige Schnittstelle (31) außerdem als Spannungsversorgungsschnittstelle zur Aufnahme von Versorgungsenergie nutzt, die von dem zweiadrigen Datenbus (10) zur Verfügung gestellt wird.

8. Anordnung mit einem Datenbus (10),
**dadurch gekennzeichnet, dass**
- der Datenbus (10) zweiadrig ist und
- an den Datenbus (10) eine Schnittstelleneinrichtung (30) nach einem der voranstehenden Ansprüche und eine zentrale Steuereinrichtung (20) angeschlossen sind.

9. Anordnung nach Anspruch 8,
**dadurch gekennzeichnet, dass**
die Steuereinrichtung (20) dazu ausgestaltet ist, ein oder mehr Zweidraht-Ethernet-Datenpakete (2EDP) der Schnittstelleneinrichtung (30), die diese aus einem analogen Messsignal (AM) eines an die Schnittstelleneinrichtung (30) angeschlossenen Feldgeräts (41) gebildet hat, zu empfangen und auszuwerten.

10. Anordnung nach Anspruch 8 oder 9,
**dadurch gekennzeichnet, dass**
die Steuereinrichtung (20) dazu ausgestaltet ist, ein oder mehr Zweidraht-Ethernet-Datenpakete (2EDP) an die Schnittstelleneinrichtung (30) zu senden, die die Schnittstelleneinrichtung (30) zu einem analogen Steuersignal (AS) für ein an die Schnittstelleneinrichtung (30) angeschlossenes Feldgerät (42) verarbeiten und an diese ausgeben kann.

11. Anordnung nach einem der voranstehenden Ansprüche 8 bis 10,
**dadurch gekennzeichnet, dass**
- an den zweiadrigen Datenbus (10) zumindest eine Überwachungseinrichtung (60) angeschlossen ist, die geeignet ist, Zweidraht-Ethernet-Datenpakete (2EDP) zu empfangen und zu senden,
- wobei die Überwachungseinrichtung (60) dazu ausgestaltet ist, über den zweiadrigen Datenbus (10) unter Einbezug der Schnittstelleneinrichtung (30) mit den Feldgeräten (41, 42) zu kommunizieren und/oder den Betrieb der Steuereinrichtung (20) zu überwachen.

12. Verfahren zum Betreiben einer Anordnung, die einen Datenbus (10) und eine Schnittstelleneinrichtung (30) mit einer busseitigen Schnittstelle (31) zum Anschluss an den Datenbus (10) und mindestens einer feldgeräteseitigen Schnittstelle (331, 332) zum Anschluss an ein Feldgerät (41, 42) aufweist, **dadurch gekennzeichnet, dass**
- die busseitige Schnittstelle (31) als eine Zweidraht-Schnittstelle (31) betrieben wird und über diese Zweidraht-Ethernet-Datenpakete (2EDP) empfangen und gesendet werden und
- die mindestens eine feldgeräteseitige Schnittstelle (331, 332) als analoge Schnittstelle (331, 332) betrieben wird und über diese analoge Messsignale (AM) empfangen und/oder analoge Steuersignale (AS) gesendet werden.

13. Verfahren nach Anspruch 12,
**dadurch gekennzeichnet, dass**
- die Schnittstelleneinrichtung (30) aus einem analogen Messsignal (AM), das ein an die Schnittstelleneinrichtung (30) angeschlossenes Feldgerät (41) gebildet und zu der Schnittstelleneinrichtung (30) übermittelt hat, ein oder mehr Zweidraht-Ethernet-Datenpakete (2EDP) bildet und diese über den zweiadrigen Datenbus (10) zu der zentralen Steuereinrichtung (20) übermittelt und
- die Steuereinrichtung (20) die Zweidraht-Ethernet-Datenpakete (2EDP) der Schnittstelleneinrichtung (30) empfängt und auswertet.

14. Verfahren nach Anspruch 12 oder 13,
**dadurch gekennzeichnet, dass**
- die Steuereinrichtung (20) ein digitales Steuersignal (DS), das für ein Feldgerät (42) bestimmt ist, zu einem oder mehr Zweidraht-Ethernet-Datenpaketen (2EDP) verarbeitet und das oder die Zweidraht-Ethernet-Datenpakete (2EDP) über den zweiadrigen Datenbus (10) zu der Schnittstelleneinrichtung (30) übermittelt und
- die Schnittstelleneinrichtung (30) aus dem oder den empfangenen Zweidraht-Ethernet-Datenpaketen (2EDP) das digitale Steuersignal (DS) wiedergewinnt, daraus ein analoges Steuersignal (AS) bildet und dieses analoge Steuersignal (AS) über die analoge Schnittstelle (31) zu dem Feldgerät (42) übermittelt.

15. Verfahren zum Umrüsten einer Anordnung, die eine Steuereinrichtung (20), einen zweiadrigen Datenbus (10) und analog arbeitende Feldgeräte (41, 42) umfasst,
**dadurch gekennzeichnet, dass**
zumindest eine vorhandene Schnittstelleneinrichtung (30), die mit einer busseitigen Schnittstelle (31) zum Anschluss an den zweiadrigen Datenbus (10) und mindestens einer feldgeräteseitigen Schnittstelle (331, 332) zum Anschluss an eines der Feldgeräte (41, 42) ausgestattet ist, durch eine Schnittstelleneinrichtung (30) nach einem der voranstehenden Ansprüche 1 bis 7 ersetzt wird und der Betrieb des zweiadrigen Datenbusses (10) von dem ursprünglichen Übertragungsbetrieb auf einen Übertragungsbetrieb auf der Basis von Zweidraht-Ethernet-Datenpaketen (2EDP) umgestellt wird.
